# FASCICULE DE BREVET EUROPEEN

(11) **EP 0 500 896 B1**
(45) Date de publication et mention de la délivrance du brevet: **18.11.1998**
(21) Numéro de dépôt: 91916670.2
(22) Date de dépôt: 12.09.1991
(51) Int. Cl.: B01J 19/12, B01J 19/08, F02M 27/04

(54) **DISPOSITIF DE IONISATION**
VORRICHTUNG ZUR IONISATION
IONIZING DEVICE

(30) Priorité: 13.09.1990 FR 9011580
(43) Date de publication de la demande: 02.09.1992
(73) Titulaire: CESA-SCHIAVON, Catherine, F-07000 Saint-Alban-d Ay (FR); CESA, Eric, F-07100 Annonay (FR); CESA, Philippe, F-07100 Annonay (FR)
(72) Inventeur: CESA, Valentin, F-07100 Annonay (FR)
(74) Mandataire: Dupuis, François
(86) Numéro de dépôt international: FR9100718
(87) Numéro de publication internationale: WO9204973

(56) Documents cités:
- EP-A- 50 884
- DE-B- 1 112 216
- GB-A- 2 185 783
- US-A- 4 064 852
- US-A- 4 672 938
- PATENT ABSTRACTS OF JAPAN vol. 11, no. 28 (M-557)(2475) 27 Octobre 1987 & JP,A,61 200 369 ( MITSUBISHI MOTORS CORP. ) 4 Septembre 1986 voir abrégé; figure 1

## Description

On sait que le processus d'accélération du feu qui affecte les foyers à bois conduit à l'implosion des conduits de fumées. Cette implosion est suivie de la production d'une grande quantité de gaz ionisé à haute fréquence qui embrase instantanément les volumes environnants dans une sorte de flash. La contraction de volume de l'implosion 〈〈aspire〉〉 facilement les parois d'un conduit de fumées.

Différent de la combustion classique, ce phénomène caractérise une autre forme de réaction de combustion à comportement ondulatoire qui a l'avantage d'ioniser parfaitement les matières et donc de produire infiniment moins d'oxydes et de fumées. Cette augmentation spontanée d'énergie est la conséquence d'un processus d'onde stationnaire pulsante générée par la forme, le volume et la condition thermodynamique de l'espace dans lequel évolue la matière en réaction. La pulsation est une suite alternative de contraction voisine des phénomènes de condensation et de dilatation sous forme de gazéification. Entre chaque ventre de pression, se situe un ventre de vitesse facteur d'accélération cinétique utilisable selon l'ordre des phases pour condenser ou pour ioniser les réactifs, ce dont l'invention propose de tirer parti.

Compte tenu de ce qui précède, le problème que se propose de résoudre l'invention est de concevoir un dispositif conformé pour augmenter l'énergie cinétique des champs de matières afin d'aboutir à une ionisation totale des réactifs.

Par le brevet EP-A-0050884, on connait un pulvérisateur à chambre de résonance pour liquides. Ce pulvérisateur présente d'une manière connue, des tuyauteries d'arrivée pour le gaz à pulvériser et pour le liquide à pulvériser ainsi qu'un canal de sorties pour le mélange du gaz et du liquide. Entre la section de sortie et la tuyauterie d'arrivée pour le gaz et la section d'entrée du canal de sortie, se trouve une chambre de résonance limitée par une surface plane. La chambre est de forme plane et de préférence prismatique en s'étendant perpendiculairement au sens d'écoulement dans le pulvérisateur.

Il apparait donc que dans ce brevet, la chambre de résonance constitue en même temps la chambre de réaction. Le but recherché est essentiellement d'obtenir une meilleure homogénéité des fluides mis en présence. La chambre de résonance a une fonction d'unification des états des réactifs. On cherche donc à obtenir un mélange homogène et à rapprocher les états respectifs des fluides vers un état commun.

D'une manière fondamentalement différente, le problème que se propose de résoudre l'invention est de faire dévier les états respectifs des réactifs vers des extrêmes opposés. Le réactif doit être conditionné et introduit dans la zone de réaction. Il est donc nécessaire de prévoir un traitement préalable avant réaction, impliquant que la chambre de résonance soit indépendante du réacteur.

Selon l'invention, pour résoudre ce problème, il a été conçu et mis au point un dispositif de ionisation qui comprend des moyens aptes à intégrer l'opérateur temps pour produire une réaction complète de toutes les molécules en différenciant plusieurs phases qui sont enrichissement, dissociation, accélération cinétique et réassociation. Ces phases sont pilotées de manière à orienter les réactifs, soit vers un niveau de plus basse énergie qui libère la chaleur, soit vers une stabilisation de la matière à un niveau d'incombustibilité qui lui fait absorber le rayonnement extérieur.

Le dispositif selon l'invention trouve une application avantageuse pour les appareils générateurs de travail moteur ou de chaleur.

Pour résoudre ces différents problèmes et atteindre ces objectifs, l'invention propose un dispositif de ionisation conforme aux caractéristiques de la revendication 1.

Suivant une caractéristique, la chambre présente à l'opposé de l'injection, un orifice d'aspiration apte à fournir le réactif dans l'état thermodynamique souhaité ; la chambre de résonance est agencée, du côté de l'injecteur pour être en communication avec l'extérieur, directement à l'air libre ou sous atmosphère contrôlée en fonction du type de réaction souhaitée.

A partir de cette réalisation de base, le dispositif trouve de nombreuses applications, comme il ressort de la description et des exemples des figures des dessins annexés dans lesquels :
- la figure 1 est une vue en coupe à caractère purement schématique montrant l'application du dispositif d'ionisation à un appareil mettant en oeuvre des effets de résonance ;
- la figure 2 est une vue en coupe transversale considérée selon la ligne 2-2 de la figure 1 ;
- la figure 3 est, à une échelle plus importante, une vue en coupe d'une forme de réalisation de l'ouverture de distribution du fluide ;

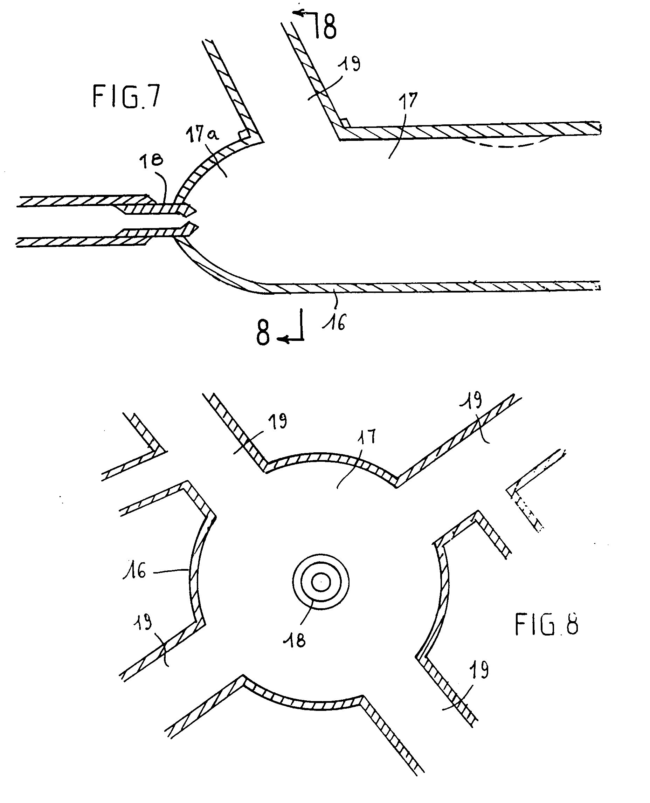

- les figures 4, 5 et 6 sont des vues en coupe longitudinale montrant différentes formes de réalisation de l'appareil mettant en oeuvre des effets de résonance en combinaison avec un équipement du type magnétron ;
- la figure 7 est une vue en coupe longitudinale à caractère schématique montrant l'accouplement de la chambre de résonance au niveau de son ouverture à un appareil du type réacteur ;
- la figure 8 est une vue en coupe considérée selon la ligne 8-8 de la figure 7 ;
- la figure 9 est une vue en coupe longitudinale montrant un exemple de construction d'un appareil mettant en oeuvre des effets de résonance en application du dispositif de ionisation selon l'invention ;
- la figure 10 est une vue en coupe longitudinale montrant l'application du dispositif à un moteur dans le cas d'un moteur à deux soupapes par cylindre ;
- la figure 11 montre le diagramme du cycle équilibré dans le cas d'une application du dispositif de ionisation à un moteur à quatre temps ;
- la figure 12 est une vue en coupe longitudinale à caractère schématique montrant une forme de réalisation de la chambre de résonance dans le cas où le dispositif de ionisation est utilisé avec des gaz ;
- la figure 13 est une vue en coupe transversale considérée selon la ligne 13-13 de la figure 12 ;
- les figures 14, 15 et 16 montrent un exemple de réalisation d'une culasse incorporant la chambre de résonance dans le cas d'une réaction d'hydrogène, à partir de liquides ; plus particulièrement :
   . la figure 14 est une vue en coupe longitudinale de la culasse ;
   . la figure 15 est une vue en coupe considérée selon la ligne 15-15 de la figure 14 ;
   . la figure 16 est une vue en coupe considérée selon la ligne 16-16 de la figure 15.

Comme indiqué, le dispositif de ionisation selon l'invention trouve une application particulièrement avantageuse pour un appareil mettant en oeuvre des effets de résonance.

Pour l'essentiel, cet appareil comprend une chambre de résonance (1) qui présente d'un côté une ouverture (1a) agencée pour la distribution du fluide conditionné. Comme il sera indiqué dans la suite de la description, cette ouverture est agencée pour être raccordée, d'une manière rigoureusement étanche, avec le réactif choisi. A l'opposé de cette ouverture (1a), la chambre de résonance (1) présente au moins un injecteur (2) assujetti à des moyens aptes à fournir le réactif sous pression. Par exemple, comme le montre la figure 9, une pompe (3), par l'intermédiaire d'une conduite d'alimentation (4), assure l'alimentation de l'injecteur (2).

La chambre de résonance peut être de forme sphéroïdale, cylindrique ou à facettes. La longueur et le volume de cette chambre sont en rapport avec la densité et la quantité de réactifs mis en oeuvre, ainsi que du ou des injecteurs utilisés. A noter que ce type d'appareil est, plus particulièrement mais non limitativement, destiné au gaz et aux liquides.

La paroi de la chambre de résonance recevant l'injecteur présente une pluralité de trous (1b) de petit diamètre et disposés d'une manière concentrique à l'injecteur. Ces trous (1b) mettent en communication la chambre de résonance (1) avec l'extérieur qui peut être soit à l'air libre, soit sous atmosphère contrôlée selon le principe de réaction recherché.

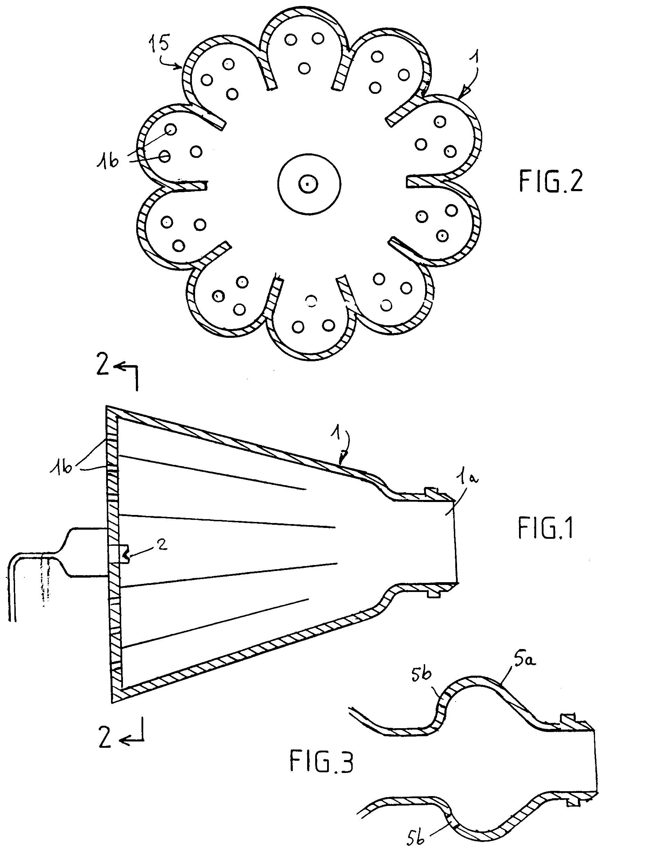

Comme le montre la figure 1, les trous (1b) sont orientés pour engendrer diverses directions de turbulences dans la chambre de résonance. A noter que le nombre de trous (1b) varie en fonction de la quantité, de la densité ou des valeurs de liaison moléculaire du réactif utilisé.

En fonction de l'efficacité de l'ionisation choisie, l'ouverture (1a) peut former un conduit (5) présentant un ou plusieurs renflements (5a) équipés de trous de résonance (5b) (figure 3).

Pour permettre à certains réactifs, notamment liquides, de s'enrichir, il est nécessaire de fournir de la chaleur. Dans ce but et en fonction du type de réacteur choisi, la chaleur est fournie par conduction au moyen par exemple de nervures ou ailettes (6) formées en débordement de la périphérie externe de la chambre de résonance (1) et en contact avec le réacteur. Par exemple, dans le cas de réacteur à énergie motrice, la chaleur peut être fournie par les gaz d'échappement au moyen d'une chambre (7) disposée autour de la chambre de résonance (1) équipée des ailettes (6). A noter que l'échange peut s'effectuer également directement sur la paroi de la chambre de résonance.

On prévoit également de combiner ces différents éléments aptes à fournir de la chaleur avec tous types de réchauffeur connus du type électrique ou autre (8). Ces réchauffeurs sont disposés au niveau du réactif et en un point quelconque de la paroi de la chambre de résonance. En outre, ces réchauffeurs (8) sont assujettis à un ensemble thermostatique (9). A noter que l'un des réchauffeurs (8) est relié au niveau de l'ouverture (1a).

Dans une autre forme de réalisation, toujours en ayant pour objectif de faciliter le démarrage du réacteur, la chambre de résonance (1) peut être accouplée à un appareil du type magnétron (10) monté en combinaison avec l'injecteur (2). Avantageusement, afin de bénéficier d'un apport de chaleur extérieure, la chambre de résonance peut être équipée d'une antenne miroir (11) disposée en regard du magnétron pour réfléchir la chaleur dans ladite chambre. Le choix de positionnement du magnétron est déterminé pour que l'antenne miroir ne gêne pas l'écoulement du fluide et ne constitue pas un obstacle condenseur.

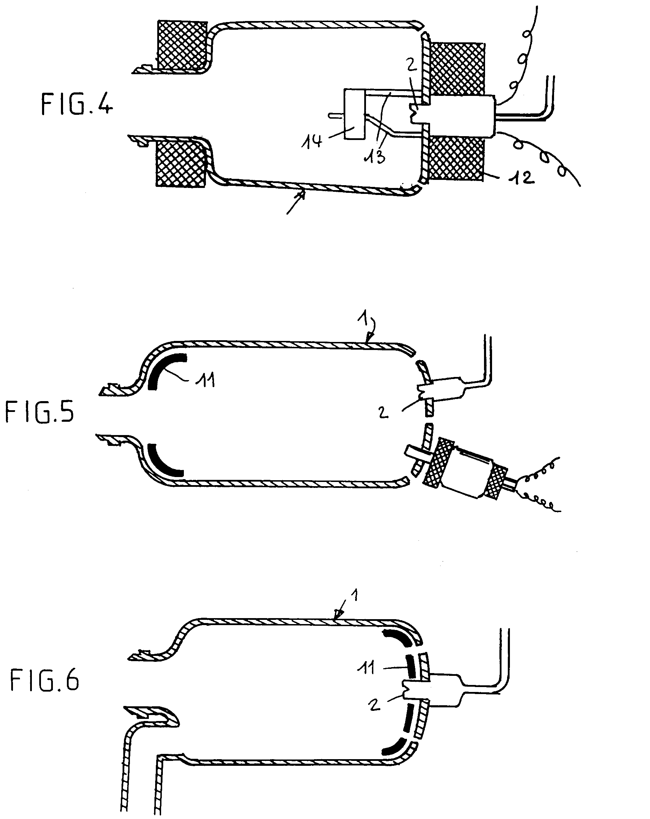

Dans une autre forme de réalisation, la chambre de résonance est équipée de moyens aptes à constituer un ensemble faisant office de magnétron. Ces moyens peuvent être constitués par des noyaux magnétiques (12) disposés à l'extérieur de la chambre au niveau notamment de l'injecteur (2) et de l'ouverture de sortie (figure 4). Dans ce cas, une antenne indépendante de l'injecteur avec anodes (13) et cathode (14), est située à l'intérieur de la chambre de résonance. Le vide nécessaire pour obtenir l'effet magnétron résulte de l'aspiration venant du réacteur, l'impulsion électrique étant fournie en continu ou alternativement synchronisée dans le cas de moteur.

Comme le montre notamment la figure 2, la périphérie de la chambre de résonance peut être constituée par une pluralité d'alvéoles (15) disposées selon les génératrices de ladite chambre. Par ailleurs, la chambre de résonance (1) peut être tronconique de section dégressive en direction de l'ouverture (figure 1).

Etant donné que la chambre de résonance peut permettre l'utilisation de différents types de réactifs, l'injecteur (2) peut être équipé d'une aiguille coaxiale (2a) réglable à partir de l'extérieur ou par variation de température afin d'adapter le débit et la pression en fonction de la densité et de la température du réactif.

Dans une autre forme de réalisation, et pour obtenir une variation de l'intensité de l'effet de résonance en fonction du changement de réactif, on prévoit de modifier à volonté le nombre de trous (1b) que présente la paroi recevant l'injecteur. Par exemple en regard de la paroi dans laquelle sont pratiqués les trous, est disposé un disque monté tournant et lui-même équipé d'un certain nombre de trous susceptibles d'être mis en communication ou non avec certains des trous (1b) de la chambre de résonance.

Compte tenu de l'application du dispositif de ionisation à un appareil mettant en oeuvre cet effet de résonance, il est possible de conditionner le réactif. Notamment, pour que la réaction produise une quantité d'énergie suffisante, il est nécessaire d'utiliser au moins deux réactifs pour obtenir un état final de moindre énergie que les états initiaux En outre, il est nécessaire, pour mettre en activité l'appareil, d'appliquer un effet de dépression au niveau de la sortie (1a).

Compte tenu du problème posé, il a été conçu et mis au point, un appareil du type réacteur (16) conformé pour mettre en oeuvre le deuxième réactif appelé comburant de manière à ce que ce deuxième réactif intervienne dans la composition de la réaction et soit en même temps utilisé pour conditionner physiquement le premier réactif.

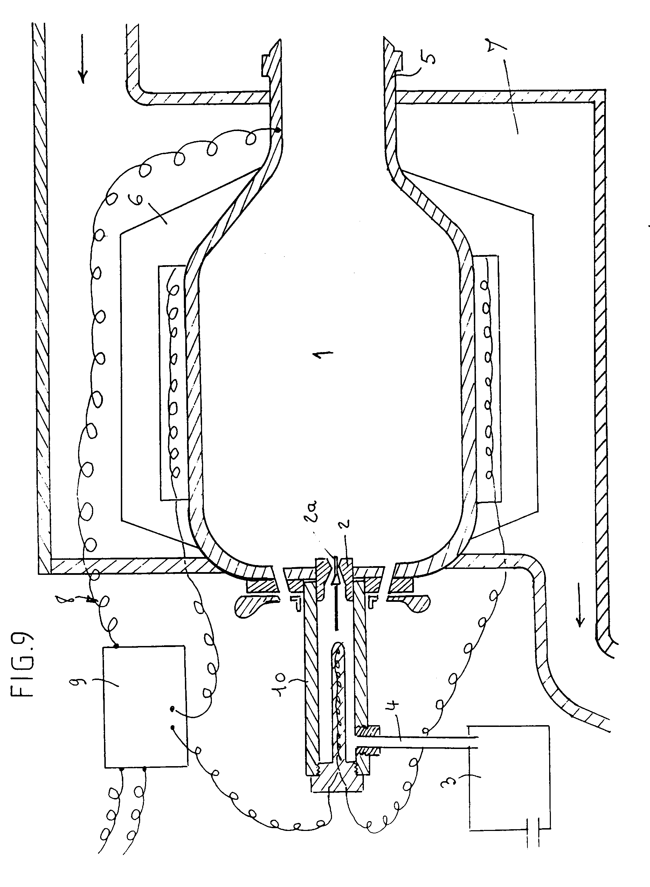

Dans la forme de réalisation illustrée figure 7 notamment, le réacteur (16) présente une chambre de réaction (17) avec un fond conique convergeant (17a) équipé coaxialement d'une buse d'injection (18) du comburant à une pression différente de 0 de manière à provoquer une forte aspiration au niveau d'une partie de communication et de raccordement (19) avec la chambre de résonance (1). Cette partie de raccordement (19) est située à proximité du fond convergeant en constituant un effet VORTEX et VENTURI au niveau de la communication avec la chambre de résonance accouplée d'une manière parfaitement étanche à ladite ouverture (19). L'extrémité de la chambre de réaction (17), à l'opposé de la buse d'injection (18), est ouverte, de manière à laisser s'échapper à la fois la chaleur et les produits de réaction.

Compte tenu de la forme tubulaire et de l'effet VORTEX et VENTURI du réacteur, le fluide comburant injecté dans la buse (18) prend la forme d'un flux parcouru par une onde stationnaire. A noter qu'en fonction des dimensions, de la géométrie et du volume du réacteur, la buse d'injection (18) peut être précédée d'un onduleur de pression apte à générer les impulsions alternatives de manière à amplifier l'effet d'onde stationnaire.

Dans une autre forme de réalisation, en ayant pour objectif d'augmenter indépendamment le nombre de réactifs, le réacteur est équipé périphériquement de plusieurs appareils du type de celui décrit précédemment et mettant en oeuvre l'effet de résonance. On renvoie par exemple à la disposition illustrée figure 8 et qui montre un exemple nullement limitatif d'un réacteur agencé avec plusieurs appareils du type résoneurs. Bien évidemment à partir de cette conception, on n'exclut pas d'autres montages et combinaisons du réacteur avec un ou plusieurs appareils mettant en oeuvre l'effet de résonance. Il apparait donc possible, compte tenu de ces dispositions, de construire un système de transformation qui ne comporte que deux espaces stationnaires en phases.

Le flux du comburant distribué par la buse (18), en passant dans la chambre de réaction (17), produit la dépression nécessaire au niveau de la ou des parties de raccordement (19) avec le ou les appareils mettant en oeuvre l'effet de résonance pour actionner l'effet du ou des résoneurs sur le réactif distribué par la buse (2). La dépression dans la chambre de résonance (1) entraîne soit l'état expansif du champ du réactif et induit son absorption de la chaleur fournie résultant par exemple des ailettes (6), soit l'état expansif sans transmission de chaleur dans le cas de réactifs gazeux. Dans le même temps, les impulsions créées par les trous (1b) de la chambre de résonance, sous l'effet de la dépression qui règne dans ladite chambre, provoquent un battement qui a pour effet d'écrêter les interférences au profit d'un soliton. La chambre de résonance (1) provoque l'unification des différents battements dans un soliton de basse fréquence. Le réactif ainsi enrichi et en expansion devient le chant de propagation de l'onde stationnaire le long de son parcours entre la chambre de résonance et la chambre de réaction. On obtient, dans ces conditions, un premier plan nodal.

Comme indiqué précédemment, en fonction de la densité ou des valeurs de liaison du réactif, il peut être utile de disposer d'organes amplificateurs par exemple sous forme de chambre de résonance conforme aux dispositions décrites et illustrées figure 3.

C'est le flux de comburant distribué en (18) qui est le générateur de l'effet venturi dans la chambre de réaction (17). Les dispositions sont prises dès la buse (18) pour que l'écoulement du flux de comburant soit stationnaire. La chambre de résonance (1) étant actionnée par l'effet venturi et STATIONNAIRE du flux de comburant, la fréquence d'oscillation du réactif qui franchit le col (19), est forcément, soit en phase, soit un harmonique du flux de comburant. Leurs amplitudes s'additionnent au sein du soliton qui se crée, ce qui a pour résultat d'augmenter la capacité de vitesse cinétique de cette onde résultante.

L'accélération cinétique du plan nodal amène les réactifs à rayonner sur une longueur d'onde qui dépend directement de l'amplitude du soliton.

Tous les réactifs franchissent obligatoirement le plan nodal et subissent les effets de l'accélération. La qualité de l'ionisation dépend de l'amplitude de la phase de dilatation c'est-à-dire de l'amplitude de l'onde résultante de l'effet du réacteur, c'est-à-dire du soliton résultant de l'addition du champ de réactif au champ de comburant.

Ce comportement ondulatoire des champs de matières décrit un cycle de transformation différent du cycle de CARNOT. Ce cycle a une particularité, celle d'être exploitable dans les deux sens avec des résultats opposés. Dans un sens, il libère de l'énergie, chaleur ou travail. Dans l'autre, il condense la matière en lui faisant absorber l'énergie. Le cycle énergétique appliqué aux moteurs, on obtient un deuxième temps qui n'est plus une compression mais une contraction des réactifs en présence. La force de cette contraction en fait une phase motrice. Ce cycle représente le comportement physique réel des brûleurs à plasma froid et pas seulement une forme théorique de rendement.

Dans ces conditions, on décrit ci-après l'application du dispositif à un moteur thermique notamment un moteur à quatre temps.

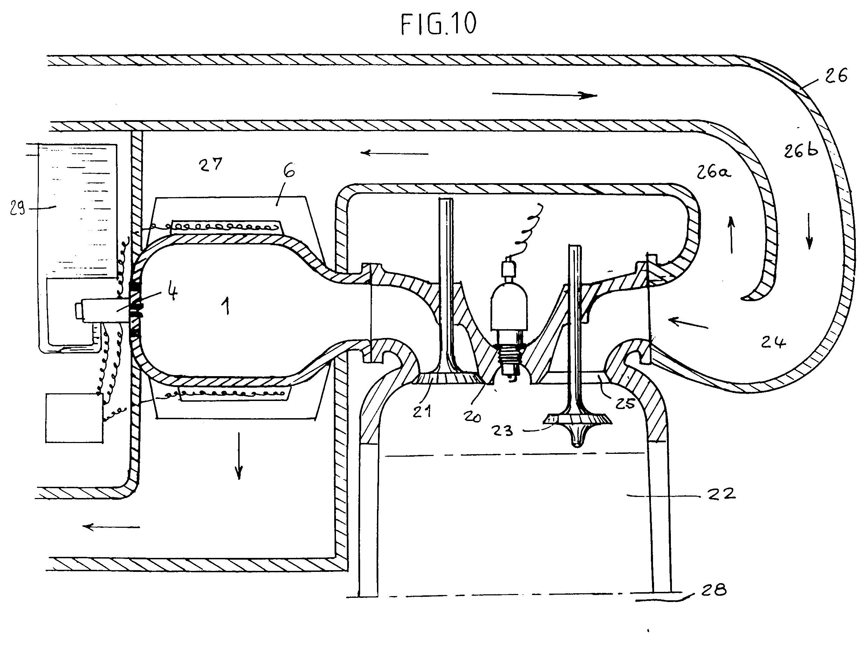

La figure 10 montre l'application du dispositif à un moteur à deux soupapes par cylindre étant bien entendu que ce dispositif peut s'appliquer à un moteur multi-soupapes présentant par exemple trois ou quatre soupapes par cylindre.

La chambre de résonance (1) est adaptée au niveau de son col (1a) au plus court de la pipe d'admission (20) dont le passage est commandé par la soupape (21) qui s'ouvre lorsque le piston (22) amorce sa descente du point mort haut (PMH) vers le point mort bas (PMB). La soupape d'échappement (23) remplit une fonction supplémentaire qui est d'admettre le comburant (24) par l'ouverture (25) de son siège. Dans ce but, une tubulure spéciale (26) présentant deux conduits séparés (26a-26b) est branchée sur la pipe d'échappement asservie par la soupape (23). Le conduit (26a) sert à l'échappement tandis que le conduit (26b) sert à l'alimentation du fluide comburant (24) au moyen d'une trompe de manière à créer la pression utile.

Dans une autre forme de réalisation, l'admission du comburant peut être asservie par exemple à l'hélice du ventilateur du moteur pour obtenir la pression nécessaire.

Le conduit d'échappement (26a) alimente un échangeur (27) situé autour de la chambre de résonance. Cet échangeur (27) a pour but de transmettre la chaleur du gaz d'échappement à la chambre de résonance (1) équipée notamment, comme indiqué, des ailettes de conduction (6). En outre, l'échangeur (27) est ouvert à l'une de ses extrémités pour permettre l'évacuation des gaz à l'extérieur. Le résoneur qui est du type de ceux décrits précédemment peut être asservi par une pompe calée sur le moteur pour que l'injection corresponde au moment de l'aspiration. De même, comme déjà indiqué, des réchauffeurs électriques ou autres disposés sur la périphérie de la chambre de résonance permettent de réchauffer le réactif au moment du démarrage.

Les cames de commande des soupapes (21 et 23) sont modifiées de sorte que la soupape d'alimentation (21) s'ouvre lorsque le piston repart du point mort haut et se ferme légèrement avant le point mort bas tandis que dans un même temps, la soupape (23) d'échappement et d'admission du comburant vient s'ouvrir.

Comme indiqué, l'invention s'applique également à un moteur multi-soupapes. La seule différence réside dans la séparation des deux conduits qui, au lieu d'aboutir à la même soupape, aboutissent chacun à la soupape qui correspond à leur fonction propre. L'arbre à came est modifié en fonction de la nécessité de synchronisation avec le cycle décrit.

Les phases du cycle ondulatoire à quatre temps appliqué aux moteurs à géométrie classique, qu'ils soient à allumage commandé ou à grande variation volumique (exemple diesel), sont les suivantes en partant de l'admission comme premier temps :
1. L'injection du combustible a lieu dans le résonateur en même temps que le piston amorce sa descente. Le vide provoqué à travers le col par le piston qui redescend soumet le combustible à l'effet vibratoire de type acoustique, dans une condition thermodynamique de pression négative. Le combustible est alors sous forme condensée d'agrégats de molécules.
2. En fin d'admission, le combustible se trouve dans le cylindre. Il est alors mis en présence du fluide comburant par l'ouverture de la soupape d'alimentation de comburant. Le contact des deux fluides entraîne la rupture ou dissociation des agrégats et libère de l'hydrogène. Ceci a pour conséquence de refroidir les réactifs et de créer une contraction capable de cristalliser des carbones.
3. Quand le piston arrive vers 350°, juste avant le point mort haut, l'amplitude de contraction du champ de réactif est à son maximum et va passer par le plan nodal de vitesse qui transforme la contraction en dilatation. Il est important de bien construire la longueur d'onde du champ dont le plan nodal d'accélération ou, ventre de vitesse, doit être parfaitement synchronisé avec le passage au point mort haut du piston sous peine de faire cogner le moteur si l'onde est trop courte ou de perdre de la puissance dans le cas contraire. L'accélération cinétique étant virtuellement rapide, le vide de l'allumage doit se situer au niveau du point mort haut et non pas avec une avance. De la sorte, la dilatation de la demi-onde repousse le piston, comme un moteur classique.
4. L'échappement est favorisé par le comportement ondulatoire en ce sens qu'après la dilatation, se situe un nouveau plan nodal ou ventre de vitesse, suivi d'une phase de contraction. On peut se permettre de retarder l'ouverture de la soupape d'échappement, conservant quelques degrés supplémentaires de pression dans le cylindre au lieu de profiler l'échappement pour empêcher que le moteur ne se 〈〈vide〉〉.

On a illustré ligne 11 le diagramme du cycle ondulatoire applicable aussi bien aux moteurs à quatre temps qu'aux réacteurs du type brûleur. Il s'agit en fait d'un cycle de transformation de la matière. Suivant le sens de pression de la demi-onde stationnaire initiale, l'onde résultante sera une onde de dilatation avec libération de chaleur ou de mouvement. Dans le cas contraire, la matière évoluera en contraction ou forme condensée, le cycle est inversé. Les dispositions des chambres de résonance additives complémentaires présentent ainsi l'avantage de pouvoir enrichir en cascade un ou plusieurs réactifs.

Les avantages d'un tel système de réaction par rapport à une réaction de combustible classique peuvent être exposés comme suit :
- la simplicité de construction du dispositif mettant en oeuvre l'effet de résonance étant donné qu'il n'y a pas de pièce en mouvement et qu'il n'est pas nécessaire de procéder à un réglage en cours d'utilisation ;
- la capacité d'admettre différents types d'hydrocarbures ;
- la réaction non détonante quel que soit le combustible ou réactif mis en oeuvre, de sorte qu'il n'est pas nécessaire de faire appel à un additif anti-déflagrant ;
- le silence de fonctionnement ;
- le rendement supérieur à une combustion classique étant donné, que l'énergie cinétique développée est très puissante et qu'il n'y a pas réassociation de gaz.
- la facilité d'adaptation à la cinématique des moteurs actuels sous réserve de quelques modifications des arbres à came ;
- la réaction s'effectue sans rejets d'oxydes ;
- la faible sollicitation des parties mécaniques du moteur étant donné que dans le cycle équilibré tel que décrit, il n'y a pratiquement pas de compression.

Bien évidemment, étant donné que chaque cylindre est considéré comme un moteur indépendant, chacun d'entre eux doit posséder son propre ensemble mettant en oeuvre l'effet de résonance. Si l'on souhaite utiliser un seul ensemble mettant en oeuvre l'effet de résonance par exemple pour quatre cylindres, l'injection devra être permanente.

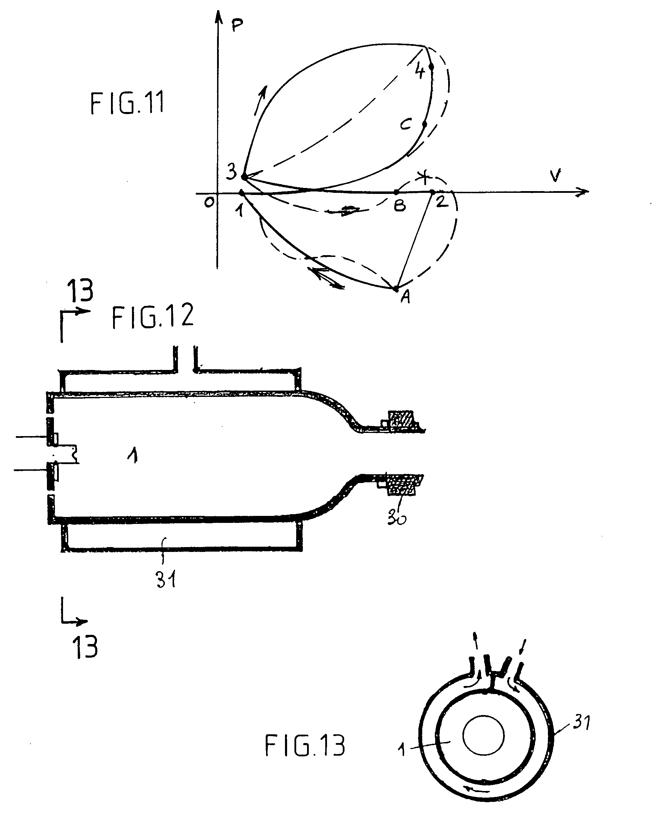

Sans pour cela sortir du cadre de l'invention, il est possible d'utiliser non pas des liquides, mais des gaz. Dans ce cas, et comme le montre la figure 12, la chambre de résonance (1) est accouplée au réacteur par interposition d'une bague isolante (30) déterminée pour supprimer les échanges thermiques avec le réacteur. De même, pour empêcher la chambre de résonance d'être soumise aux effets de la chaleur ambiante, la paroi de ladite chambre est doublée d'une enveloppe (31) apte à délimiter un espace annulaire dans lequel peut circuler tout type de liquide de refroidissement. L'effet d'absorption de la chambre de résonance est apte à empêcher la vaporisation du liquide de refroidissement.

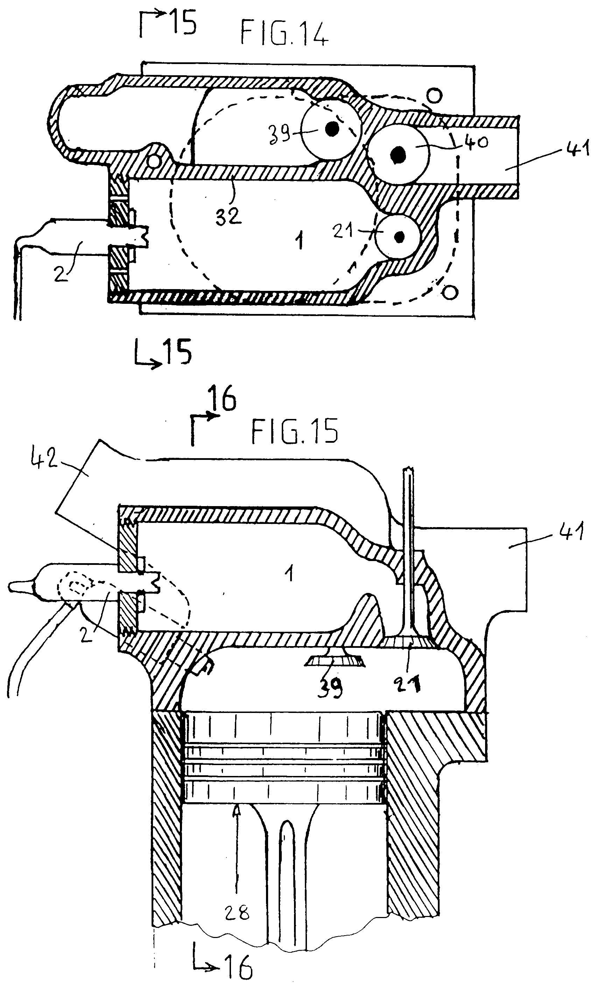

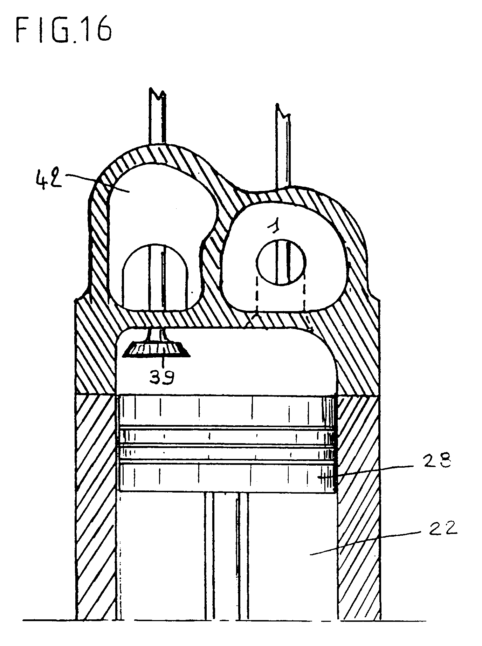

Aux figures 14, 15 et 16, on a désigné par les mêmes repères, les

Une des formes de réalisation incorpore la chambre de résonance directement dans la culasse à partir du moulage de celle-ci. On renvoie aux figures 14, 15 et 16, qui montrent un exemple de réalisation de chambre de résonance incorporée à la culasse.

Compte tenu de ces dispositions, la chambre de résonance est séparée de la chambre de combustion ionique (28) par une simple paroi (32). L'excédent de chaleur de la réaction dans la chambre (33) est directement transmis dans la chambre de résonance (1).

Aux figures 14, 15 et 16, on a désigné par les mêmes repères, les différentes pièces déjà décrites précédemment, à savoir essentiellement, la chambre de résonance (1), l'injecteur (2), la soupape d'admission (21), la chambre de réaction ionique (28). La soupape d'échappement est désignée par (39) et celle d'admission du comburant par (40), les tubulures séparées d'admission par (41) et d'échappement par (42).

De telles dispositions offrent des avantages très importants parmi lesquels il convient de souligner essentiellement :
- le processus de résonance consommant une quantité non négligeable de chaleur, le transfert en résultant est de nature à refroidir le réacteur, notamment la culasse, tout en transférant l'énergie récupérée au réactif combustible ;
- la facilité de construction du moteur en supprimant différentes phases opératoires d'usinage, notamment au niveau de l'accouplement entre la chambre de résonance et la chambre de réaction. Il en résulte également une diminution de l'encombrement et du volume total. Il est en outre possible de racourcir la pipe d'admission et de supprimer le joint en réduisant par conséquent, les risques de condensation ;

## Revendications

1. Dispositif de ionisation notamment pour appareil générateur, comprenant au moins une chambre de pompage par résonance (1) communiquant avec un appareil générateur, en permanence ou de manière périodique, par une ouverture (1a) conformée pour autoriser à la fois le passage du flux du fluide et l'effet résonateur **caractérisé** :
- en ce que la chambre de résonance (1) est accouplée d'une manière étanche, au niveau de son ouverture, à un appareil du type réacteur (16),
- en ce que le réacteur (16) comprend une chambre de réaction (17) avec un fond conique convergent équipé coaxialement d'une buse d'injection (18) du comburant à une pression différente de 0, de manière à provoquer une forte aspiration au niveau d'une partie de raccordement et de communication avec la chambre de résonance, ladite partie étant située à proximité dudit fond convergent en constituant un effet VORTEX et VENTURI, l'extrémité de la chambre de réaction (17), à l'opposé de la buse d'injection (18) du comburant est ouverte,
- en ce que ledit réacteur met en oeuvre un deuxième réactif sous forme d'un comburant pour que ce dernier entre dans la composition de la réaction tout en étant utilisé pour conditionner le premier réactif.

2. Dispositif selon la revendication 1, **caractérisé** en ce que la chambre (1) présente à l'opposé de l'injection (2), un orifice d'aspiration (1a) apte à fournir le réactif dans l'état thermodynamique souhaité ; la chambre de résonance (1) est agencée, du côté de l'injecteur (2), pour être en communication avec l'extérieur, directement à l'air libre ou sous atmosphère contrôlée en fonction du type de réaction souhaitée.

3. Dispositif selon la revendication 1, **caractérisé** en ce que l'ouverture de distribution (1a) de la chambre de résonance (1) est prolongée par une partie profilée (5a) apte à constituer elle-même une chambre de résonance réduite, ladite partie profilée étant agencée pour être en communication avec l'extérieur.

4. Dispositif selon l'une quelconque des revendications 1 et 2, **caractérisé** en ce que la chambre de résonance présente des agencements externes (6) aptes à fournir de la chaleur pour enrichir le réactif.

5. Dispositif selon la revendication 1, **caractérisé** en ce que des organes réchauffeurs (8) sont montes en combinaison avec l'injecteur (2) et la paroi de la chambre de résonance (1), lesdits organes étant susceptibles d'être asservis par un thermostat (9).

6. Dispositif selon la revendication 1, **caractérisé** en ce que la chambre de résonance présente, au niveau de ses agencements de communication avec l'extérieur, des alvéoles (15) délimitant un tronc de cône de section dégressive en direction de l'ouverture, opposée à l'injecteur.

7. Dispositif selon la revendication 1, **caractérisé** en ce que l'injecteur est équipé intérieurement d'une aiguille (2a) montée avec capacité de réglage pour adapter le débit et la pression en fonction de la densité et de la température du réactif.

8. Utilisation du dispositif à un moteur à quatre temps, à deux soupapes par cylindres selon l'une quelconque des revendications 1 à 7, **caractérisé** en ce que la chambre de résonance (1) est accouplée d'une manière étanche, par son ouverture agencée pour la distribution du fluide, à une pipe d'admission (20) dont le passage est commandé par une soupape (21) qui s'ouvre lorsque le piston (22) amorce sa descente du point mort haut vers le point mort bas ; la soupape d'échappement (23) outre sa fonction initiale, coopère avec un siège en communication avec une tubulure (26) comportant deux conduits séparés dont l'un permet l'alimentation en comburant, tandis que l'autre permet l'évacuation des gaz de combustion et l'alimentation d'un système échangeur de chaleur (27) disposé autour de la chambre de résonance dont l'injecteur est asservi par tous moyens déterminés pour que l'injection corresponde au moment de l'aspiration.

9. Utilisation du dispositif selon la revendication 8 **caractérisé** en ce que la soupape d'échappement et d'admission (23) du comburant présente, du côté de la chambre de réaction du cylindre considéré, un profil apte à assurer une meilleure évacuation des gaz.

10. Dispositif selon la revendication 1, **caractérisé** en ce que la chambre de résonance (1) présente d'un côté, une ouverture agencée pour la distribution d'un gaz, à l'opposé de l'ouverture, la chambre présentant au moins un injecteur (2), la paroi de ladite chambre de résonance étant doublée d'une enveloppe apte à délimiter un espace annulaire (31) pour la circulation d'un fluide de refroidissement, l'ouverture de la chambre étant déterminée pour être accouplée à l'appareil récepteur du type réacteur par interposition d'un moyen isolant déterminé pour assurer les échanges thermiques nécessaires.

11. Utilisation du dispositif selon la revendication 8, **caractérisé** en ce que la chambre de résonance (1) est incorporée à la culasse du moteur, ladite chambre étant séparée de la chambre de combustion ionique par une simple paroi, tandis que l'excédent de chaleur de la réaction est directement transmis dans la chambre de résonance.

## Claims

1. Ionising device for use with notably generating apparatus and comprising at least one resonance pumping chamber (1) communicating either permanently or periodically with a generating apparatus through an opening (1a) capable of simultaneously passing the fluid and the resonance, characterised in that:
- the opening of the resonance chamber (1) is hermetically connected to a reactor-type apparatus (16);
- the reactor (16) comprises a reaction chamber (17) with a converging conical bottom equipped with a co-axial fuel injection nozzle (18) which, at a pressure other than 0, causes strong suction in the part of the connection with the resonance chamber located near the end of said converging bottom by a VORTEX and a VENTURI effect, the end of the reaction chamber (17) opposite the fuel injection nozzle (18) being open,
- said reactor uses a second, fuel-type reagent which, as it participates in the reaction, conditions the first reagent.

2. Device as claimed in claim 1, characterised in that the chamber (1) has an intake port (1a) opposite the injection nozzle (2) suitable for delivering the reagent in the desired thermodynamic state, the resonance chamber (1) on the side of the injection nozzle (2) being vented either directly to the atmosphere or to a controlled environment as a function of the type of reaction desired.

3. Device as claimed in claim 1, characterised in that the distribution opening (1a) of the resonance chamber (1) is extended by a profiled part (5a) suitable to act itself as a small resonance chamber, said profiled part being in communication with the outside.

4. Device as claimed in any of the claims 1 and 2, characterised in that the resonance chamber has external arrangements (6) for providing heat to enrich the reagent.

5. Device as claimed in claim 1, characterised in that the heating system (8) is mounted in combination with the injector (2) and the wall of the resonance chamber (1), said system being suitable for thermostat control (9).

6. Device as claimed in claim 1, characterised in that the resonance chamber in the area where it communicates with the outside has cells (15) defining a truncated cone the section of which diminishes towards the opening opposite the injector.

7. Device as claimed in claim 1, characterised in that the injector is internally fitted with a needle (2a) capable of controlling flow and pressure as a function of reagent density and temperature.

8. Use of the device with a four-stroke, twin-valve cylinder engine as claimed in any of the claims 1 to 7, characterised in that the fluid distribution orifice of the resonance chamber (1) is hermetically connected to an intake pipe (20) the entry to which is controlled by a valve (21) that opens when the piston (22) starts its descent from top dead centre to bottom dead centre, the seat of the exhaust valve (23) in addition to its initial function communicating with a manifold (26) with two separate pipes one of which supplies the fuel, the other exhausting the gas to a system of heat exchangers (27) arranged around the resonance chamber the injector of which is controlled such that injection coincides with intake.

9. Use of the device as claimed in claim 8, characterised in that the fuel inlet and exhaust valve (23) has a profile favouring gas exhaust on the side of the reaction chamber of the cylinder under consideration.

10. Device as claimed in claim 1, characterised in that the resonance chamber (1) has on one side an opening arranged to deliver a gas, the chamber opposite that opening having at least one injector (2) the wall of said resonance chamber being double so as to form an annular space (31) for coolant circulation, the opening of the chamber being connected to receiving apparatus of the reactor type across a means of insulation designed to cause the necessary exchange of heat.

11. Use of the device as claimed in claim 8, characterised in that the resonance chamber (1) is incorporated into the cylinder head of the engine, said chamber being separated from the ion combustion chamber by a single wall, with excess reaction heat being directly transmitted to the resonance chamber.

## Patentansprüche

1. Ionisierungsvorrichtung insbesondere für Generatorgeräte bestehend aus mindestens einer Resonanzpumpkammer (1), die über eine Öffnung (1a), die so ausgebildet ist, um gleichzeitig den Durchfluß des Mediums und den Resonanzeffekt zu ermöglichen, ständig oder zeitweise mit einem Generatorgerät in Verbindung steht, dadurch gekennzeichnet, daß :
- die Resonanzkammer (1) im Bereich der Öffnung dicht mit einem reaktorartigen Gerät (16) verkoppelt ist,
- der Reaktor (16) eine Reaktionskammer (17) mit einem konvergenten konischen Boden besitzt, der koaxial mit einer Einspritzdüse (18) des Sauerstoffträgers bei einem von 0 verschiedenen Druck ausgestattet ist, um im Bereich eines Anschluß- und Verbindungsteils mit der Resonanzkammer eine starke Ansaugung zu bewirken, wobei sich dieser Teil in der Nähe des konvergenten Bodens befindet, und wobei einen VORTEX- und VENTURI-Effekt gebildet ist, während das Endstück der Reaktionskammer (17) gegenüber der Einspritzdüse (18) des Sauerstoffträgers geöffnet ist,
- der besagte Reaktor ein zweites Reagens in Form eines Sauerstoffträgers verwendet, damit dieser in die Zusammensetzung der Reaktion einfließt und gleichzeitig für die Konditionierung des ersten Reagenses genutzt wird.

2. Vorrichtung nach Anspruch 1, dadurch gekennzeichnet, daß die Kammer (1) gegenüber der Einspritzstelle (2) eine Ansaugöffnung (1a) aufweist, die geeignet ist, das Reagens im gewünschten thermodynamischen Zustand zu liefern; die Resonanzkammer (1) ist auf der Seite der Düse (2) angeordnet, um mit der Außenseite in Verbindung zu stehen - je nach gewünschter Reaktionsart entweder direkt mit der Außenluft oder unter kontrollierter Atmosphäre.

3. Vorrichtung nach Anspruch 1, dadurch gekennzeichnet, daß die Verteileröffnung (1a) der Resonanzkammer (1) durch einen profilierten Teil (5a) verlängert ist, der geeignet ist, selbst eine reduzierte Resonanzkammer zu bilden, wobei dieser profilierte Teil so beschaffen ist, daß er mit der Außenseite in Verbindung steht.

4. Vorrichtung nach einem der Ansprüche 1 und 2, dadurch gekennzeichnet, daß die Resonanzkammer äußere Vorkehrungen (6) aufweist, die geeignet sind, die Wärme zur Anreicherung des Reagenses zu liefern.

5. Vorrichtung nach Anspruch 1, dadurch gekennzeichnet, daß in Kombination mit der Düse (2) und der Wand der Resonanzkammer (1) Vorwärmer (8) angebracht sind, die von einem Thermostat (9) geregelt werden können.

6. Vorrichtung nach Anspruch 1, dadurch gekennzeichnet, daß die Resonanzkammer im Bereich der Außenverbindungen Aushöhlungen (15) aufweist, die einen Kegelstumpf mit einem zu der Düse gegenüberliegenden Öffnung hin abnehmenden Querschnitt begrenzen.

7. Vorrichtung nach Anspruch 1, dadurch gekennzeichnet, daß die Düse innen mit einer verstellbar angebrachten Nadel (2a) ausgestattet ist, um Durchflußmenge und Druck an die Dichte und Temperatur des Reagenses anzupassen.

8. Verwendung der Vorrichtung bei einem Viertaktmotor mit zwei Ventilen pro Zylinder nach einem der Ansprüche 1-7, dadurch gekennzeichnet, daß die Resonanzkammer (1) über die Öffnung für die Verteilung des Mediums dicht mit einem Ansaugrohr (20) verkoppelt ist, dessen Durchgang von einem Ventil (21) gesteuert wird, das sich öffnet, wenn der Kolben (22) seine Abwärtsbewegung vom oberen Totpunkt zum unteren Totpunkt beginnt; außer seiner ursprünglichen Funktion steht das Auslaßventil (23) über einen Ventilsitz mit einem Rohrstutzen (26) in Verbindung, der zwei getrennte Leitungen besitzt, eine für die Versorgung mit Sauerstoffträger und die andere für die Ableitung der Verbrennungsgase und die Speisung eines Wärmetauschersystems (27), das um die Resonanzkammer herum angeordnet ist, deren Düse durch bestimmte Vorkehrungen so gesteuert wird, daß die Einspritzung dem Moment der Ansaugung entspricht.

9. Verwendung der Vorrichtung nach Anspruch 8, dadurch gekennzeichnet, daß das Auslaß- und Ansaugventil (23) des Sauerstoffträgers auf der Seite der Reaktionskammer des betreffenden Zylinders ein Profil aufweist, das geeignet ist, eine bessere Ableitung der Gase zu gewährleisten.

10. Vorrichtung nach Anspruch 1, dadurch gekennzeichnet, daß die Resonanzkammer (1) auf einer Seite eine Öffnung besitzt, die für die Verteilung eines Gases ausgebildet ist, wobei die Kammer auf der Gegenseite der Öffnung mindestens eine Düse (2) aufweist und die Wand der Resonanzkammer mit einem Mantel ausgekleidet ist, der geeignet ist, einen ringförmigen Raum (31) für den Umlauf eines Kühlmediums zu begrenzen; die Öffnung der Kammer ist dabei so ausgelegt, um durch Einfügung einer Isoliereinrichtung zur Gewährleistung des erforderlichen Wärmeaustauschs an das reaktorartige Aufnahmegerät angekoppelt zu werden.

11. Verwendung der Vorrichtung nach Anspruch 8, dadurch gekennzeichnet, daß die Resonanzkammer (1) in den Zylinderkopf des Motors eingebettet ist, wobei die Kammer durch eine einfache Wand von der Ionenverbrennungskammer getrennt ist, während die überschüssige Reaktionswärme unmittelbar in die Resonanzkammer übertragen wird.
